Europäisches Patentamt

European Patent Office

Office européen des brevets

(11) Veröffentlichungsnummer : **0 085 929**
**B1**

(12) **EUROPÄISCHE PATENTSCHRIFT**

(45) Veröffentlichungstag der Patentschrift :
22.01.86

(21) Anmeldenummer : **83100942.8**

(22) Anmeldetag : **01.02.83**

(51) Int. Cl.⁴ : **F 16 B 21/08, B 63 B 35/82**

(54) Vorrichtung zur lösbaren Befestigung eines Endes eines langgestreckten Gliedes, insbesondere eines Fussschlaufenbandes auf einem Segelbrett.

(30) Priorität : **02.02.82 DE 3203372**

(43) Veröffentlichungstag der Anmeldung :
**17.08.83 Patentblatt 83/33**

(45) Bekanntmachung des Hinweises auf die Patenterteilung : **22.01.86 Patentblatt 86/04**

(84) Benannte Vertragsstaaten :
**AT DE FR GB IT NL**

(56) Entgegenhaltungen :
**EP-A- 0 028 801**
**EP-A- 0 050 878**
**FR-A- 2 113 202**
**FR-A- 2 259 273**
**US-A- 2 826 807**
**US-A- 3 908 235**
**US-A- 3 909 883**

(73) Patentinhaber : **Hegele, Franz**
**Saarlandstrasse 27**
**D-8011 Neukeferloh (DE)**

(72) Erfinder : **Hegele, Franz**
**Saarlandstrasse 27**
**D-8011 Neukeferloh (DE)**

(74) Vertreter : **Weickmann, Heinrich, Dipl.-Ing. et al**
**Patentanwälte Dipl.-Ing. H.Weickmann Dipl.-Phys.Dr. K.Fincke Dipl.-Ing. F.A.Weickmann Dipl.-Chem. B. Huber Dr.-Ing. H. Liska Dipl.-Phys.Dr. J. Prechtel**
**Postfach 860820**
**D-8000 München 86 (DE)**

## Beschreibung

Die Erfindung betrifft eine Vorrichtung zur lösbaren Befestigung eines Endes eines langgestreckten Gliedes, insbesondere eines Fußschlaufenbandes, auf einem Segelbrett nach dem Oberbegriff des Anspruchs 1.

Eine nach der FR-PS 2 113 202 bekannte Vorrichtung dieser Art weist eine Sperrklinke mit zwei V-förmig zueinanderlaufenden, sich federnd nach außen spreizenden Armen auf, von denen jeder einen von zwei sich gegenüberliegenden Unterschneidungsbereichen des Lochs hintergreifen kann. Die Angriffsflächen der Arme an den Hinterschneidungsbereichen sind derart abgerundet, daß bei Zug an dem langgestreckten Glied die Haltekraft der Sperrklinke vergrößert wird. Um die Sperrklinke wieder aus dem Loch zu entfernen, müssen die beiden Arme aneinandergedrückt werden ; man muß also an die Arme herankommen.

In der nicht vorveröffentlichten europäischen Patentanmeldung EP-A-0 084 863 ist eine ähnliche Vorrichtung beschrieben, bei der das Sperrglied durch eine Verdickung am Ende des langgestreckten Glieds gebildet ist, die in ein weites Loch gesteckt und dann seitlich unter zwei Hinterschneidungen geschoben werden kann, worauf anschließend das weite Loch mit einem Blockierstück gefüllt wird, so daß das Sperrglied nicht seitlich aus dem Bereich der Hinterschneidungen hinausgeschoben werden kann. Die Handhabung dieser Vorrichtung ist etwas aufwendig und bedarf des zusätzlichen weiten Lochs und des Blockierstücks.

In der ebenfalls nicht vorveröffentlichten europäischen Patentanmeldung EP-A-0 050 878 ist ein Sperrglied beschrieben, das lose in einen Kreuzschlitz gesteckt werden kann und dann um 90° verdreht wird, um durch Hinterschneidungen festgelegt zu werden. Der Raumbedarf ist dabei verhältnismäßig groß, die Handhabung unvorteilhaft, und außerdem können die Ecken des Kreuzschlitzes bei unsachgemäßer Betätigung ausbrechen.

Aufgabe der Erfindung ist es demgegenüber, eine Vorrichtung nach dem Oberbegriff des Anspruchs 1 anzugeben, die nur einen geringen Raumbedarf hat sowie einfach und sicher zu handhaben ist.

Die Lösung dieser Aufgabe ist im Kennzeichen des Anspruchs 1 angegeben.

Die Erfindung eignet sich besonders zur lösbaren Befestigung eines Fußschlaufenbands an einem Segelbrett in der Weise, daß sich die Verbindung Fußschlaufenband — Segelbrett bei Überschreiten einer größtzulässigen, auf das Fußschlaufenband einwirkenden Zugkraft löst und den Fuß des Seglers freigibt. Diese Forderung nach einer vorbestimmbaren, größtzulässigen Auslösekraft wird praktisch für alle in der Praxis vorkommenden Richtungen der Zugkraft und auch für Kräfte, welche aus Momenten resultieren, erfüllt. So wird z. B. erreicht, daß die beim Zusammenstoß mit einem festen Hindernis oder mit einem anderen Wasserfahrzeug parallel zur Oberfläche des Segelbretts entgegen der Fahrtrichtung auf den Fuß des Seglers einwirkenden Kräfte einen größtzulässigen Wert nicht überschreiten.

Die Fußschlaufe löst sich bei Überschreiten der Auslösekraft dadurch aus ihrem Befestigungselement, daß die auf sie einwirkende Zugkraft als Druckkraft auf die Sperrklinke umgeleitet wird und diese ausbeult. Es ist dabei von nur geringem Einfluß, unter welchem Winkel eine Zugkraft auf die Fußschlaufe einwirkt, da diese an den Oberkanten des Lochs umgelenkt wird und dann ein Ausbeulen der Sperrklinke bewirkt.

Eine Vorbestimmung der Auslösekraft auf die größtzulässige Belastung der Physis des Seglers erfolgt entweder durch eine entsprechend dimensionierte Ausbildung der Sperrklinke oder durch eine Veränderung der Geometrie der Hinterschneidung derart, daß bei gegebener Ausbildung der Sperrklinke diese in unterschiedlich großem Maße bis zu ihrem Herausgleiten aus dem Loch verformt wird.

Von dem für die Sperrklinke verwendeten Material und dessen Ausbildung sowie von der Art des Ausbeulens bis zum Erreichen des Auslösepunkts hängt es ab, ob die Ausbeulung plastisch und irreversibel oder elastisch und reversibel ist. Grundsätzlich ist die Verwendung des geschilderten Funktionsprinzips für ein « Einmal-Fußschlaufenband » möglich, welches aufgrund einer plastischen Deformation der Sperrklinke nach einmaligem Auslösen ersetzt werden muß.

Ein Vorteil eines solchen « Einmal-Fußschlaufenbandes » ist, daß durch die Wahl sehr kleiner Ausbeulradien, durch welche die Sperrklinke beim Auslösen gezwungen wird und welche sie daher plastisch verformen, mit kleinen und leichten Elementen eine hohe Halte- bzw. Auslösekraft erreicht werden kann. Die Vorgabe größerer, elastisch reversibler Biegeradien für die Sperrklinke eines wiederverwendbaren Fußschlaufenbandes bedingt dagegen einen größeren Querschnitt der Bauteile.

Die Befestigung des Fußschlaufenbandes erfolgt durch einfaches Einschnappen der Sperrklinke in die Hinterschneidung des Lochs. Das Fußschlaufenband kann dadurch gelöst werden, daß die federnde Sperrklinke entweder durch Drücken gegen einen dafür an ihr vorgesehenen Fortsatz, welcher mit den Fingern zu erreichen ist, aus der Hinterschneidung ausgehoben wird oder dadurch, daß dieses Ausheben bzw. Zusammendrücken der Sperrklinke durch ein einfaches Werkzeug, z. B. Schraubenzieher, erfolgt, welches durch eine Aussparung im Loch an die Sperrklinke angesetzt wird.

Die Erfindung wird im folgenden an Ausführungsbeispielen unter Hinweis auf die beigefügten Zeichnungen beschrieben :

Figur 1 zeigt eine Sicherheitsfußschlaufe vor ihrer Befestigung und im befestigten Zustand,

Figur 2 zeigt das Verhalten der Sicherheitsfußschlaufe nach Fig. 1 während des Herausziehens,

Figur 3 zeigt eine andere Ausbildung der Halterung der Sicherheitsfußschlaufe.

In allen Ausführungsbeispielen handelt es sich um eine Sicherheitsfußschlaufe für ein Segelbrett 1 mit einem Fußschlaufenband 2, das mit einem Ende 4 in einem eine Hinterschneidung 6 aufweisenden Loch 7 im Segelbrett 1 lösbar zu befestigen ist. An dem Ende 4 des Fußschlaufenbandes 2 befindet sich eine Sperrklinke 10 aus verformbarem Material, die bei Einführung des zu dem Ende 4 führenden Endabschnitts 8 des Fußschlaufenbandes 2 in das Loch 7 mit ihrer Stirnfläche 12 die Hinterschneidung 6 hintergreift und sich dadurch in dem Loch verrastet. Bei den Ausführungsbeispielen besteht die Sperrklinke 10 mit dem Endabschnitt 8 des Fußschlaufenbandes einstückig aus elastisch biegsamem Material.

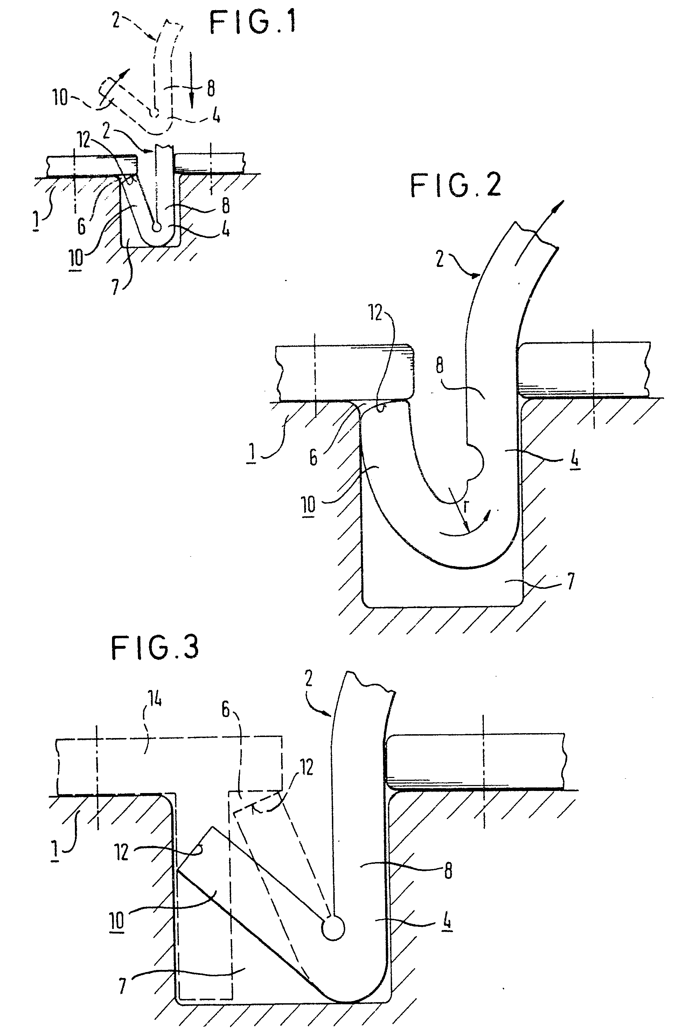

Bei dem Ausführungsbeispiel nach Fig. 3 ist die Hinterschneidung 6 an einem das Loch 7 begrenzenden, auswechselbar an dem Segelbrett 1 zu befestigenden Einsatz 14 ausgebildet.

Die Sperrklinke 10 kann auch — was nicht dargestellt ist — auswechselbar an dem Ende des Fußschlaufenbandes 2 befestigt sein.

An der Sperrklinke 10 kann sich — was ebenfalls nicht dargestellt ist — ein aus dem Loch 7 ragender Ansatz befinden, mittels dem die Sperrklinke 10 von Hand zu entrasten ist.

Auch kann — was wiederum nicht dargestellt ist — eine zu der Sperrklinke 10 führende Ausnehmung vorgesehen sein, in die ein Werkzeug zum Entrasten der Sperrklinke 10 einführbar ist.

Das Befestigungsprinzip der Sicherheitsfußschlaufe kann auch zur lösbaren Befestigung von Riggsicherungsleinen, Abschleppleinen o. ä. angewendet werden, z. B. anstelle von Karabinerhaken.

Wenn die Sperrklinke 10 am Endabschnitt 8 des Fußschlaufenbandes 2 in das Loch 7 eingeschoben wird, rastet die Sperrklinke 10 federnd hinter die Hinterschneidung 6. Beim Herausziehen des Fußschlaufenbandes 2 aus der Verrastung wird, die aus Fig. 2 ersichtlich, die Sperrklinke 10 gegen die Hinterschneidung 6 gestaucht, ausgebeult und mit dem Radius r gekrümmt. Ist ein minimaler Krümmungsradius überschritten, mindert sich auch die Kraft zum weiteren Herausziehen des Fußschlaufenbandes 2. Somit wird eine Rastwirkung erzielt.

Durch auswechselbare Einsätze 14 gemäß Fig. 3 in dem Loch 7 läßt sich die Eingriffsstellung der Sperrklinke 10 in ihrer Verrastung verändern und somit auch die maximale Kraft, die zum Herausziehen des Fußschlaufenbandes erforderlich ist.

## Patentansprüche

1. Vorrichtung zur lösbaren Befestigung eines Endes eines langgestreckten Glieds, insbesondere eines Endes eines Fußschlaufenbands (2), in einem eine Hinterschneidung (6) aufweisenden Loch (7), insbesondere in einem Segelbrett (1), bei der sich an dem Ende (4) des langgestreckten Glieds (2) eine an den zu dem Ende (4) führenden Endabschnitt (8) des langgestreckten Glieds (2) gegen Federkraft zu drückende Sperrklinke (10) aus verformbarem Material befindet, die bei Einführung des Endabschnitts (8) in das Loch (7) mit ihrer Stirnfläche (12) die Hinterschneidung (6) hintergreift und sich dadurch in dem Loch (7) verrastet, dadurch gekennzeichnet, daß die Sperrklinke (10) aus einem biegsamen Material besteht, das sich bei Herausziehen des langgestreckten Glieds aus dem Loch (7) bis zur Lösung der Stirnfläche (12) der Sperrklinke (10) von der Hinterschneidung (6) durch den von der Hinterschneidung (6) über die Stirnfläche (12) auf die Sperrklinke (10) ausgeübten Stauchdruck ausbeult und dadurch eine Freigabe des langgestreckten Glieds bewirkt.

2. Vorrichtung nach Anspruch 1, dadurch gekennzeichnet, daß die Sperrklinke (10) mit dem Endabschnitt (8) des langgestreckten Glieds (2) einstückig aus elastisch biegsamem Material besteht.

3. Vorrichtung nach Anspruch 2, dadurch gekennzeichnet, daß sich die Hinterschneidung (6) an einem das Loch (7) begrenzenden, auswechselbar zu befestigenden Einsatz (14) befindet.

4. Vorrichtung nach Anspruch 1, dadurch gekennzeichnet, daß die Sperrklinke (10) auswechselbar an dem Ende (4) des langgestreckten Glieds (2) befestigt ist.

5. Vorrichtung nach Anspruch 1, dadurch gekennzeichnet, daß sich an der Sperrklinke (10) ein aus dem Loch (7) ragender Ansatz befindet, mittels dem die Sperrklinke (10) von Hand zu entrasten ist.

6. Vorrichtung nach Anspruch 1, gekennzeichnet durch eine zu der Sperrklinke (10) führende Ausnehmung, in die ein Werkzeug zum Entrasten der Sperrklinke (10) einführbar ist.

## Claims

1. A device for releasably fastening one end of an elongate member, in particular an end of a foot-loop strap (2), in a hole (7) having an undercut (6), in particular in a sail-board (1), in which at the end (4) of the elongate member (2) there is provided a catch (10) of deformable material, which is to be pressed counter to spring force against the end portion (8) of the elongate member (2) leading to the end (4) and which, upon insertion of the end portion (8) into the hole (7), engages with its end face (12) behind the undercut (6) and is thereby engaged in the hole (7), characterised in that the catch (10) consists of a flexible material which, upon withdrawal of the elongate member from the hole (7) until the end face (12) of the catch (10) is released from the undercut (6), bulges out as a result of the compressing force exerted on the catch (10) by the undercut (6) via the end face (12) and thereby effects a release of the elongate member.

2. A device according to Claim 1, characterised in that the catch (10) consists of elastically flexible material in one piece with the end portion (8) of the elongate member (2).

3. A device according to Claim 2, characterised in that the undercut (6) is provided by an insert (14) bounding the hole (7) and to be replaceably secured.

4. A device according to Claim 1, characterised in that the catch (10) is replaceably secured to the end (4) of the elongate member (2).

5. A device according to Claim 1, characterised in that the catch (10) has an extension protruding from the hole (7), by means of which the catch (10) can be disengaged by hand.

6. A device according to Claim 1, characterised by a recess which leads to the catch (10) and into which a tool can be inserted for disengaging the catch (10).

**Revendications**

1. Dispositif de fixation amovible d'une extrémité d'un élément allongé, notamment d'une extrémité d'une sangle (2) de retenue du pied, dans un logement (7) muni d'un décrochement (6), en particulier dans une planche à voile (1), dispositif dans lequel se trouve, à l'extrémité (4) de l'élément allongé (2), un cliquet de verrouillage (10) en un matériau déformable, qui doit être pressé à l'encontre d'une force élastique sur le tronçon extrême (8) de l'élément allongé (2) gagnant l'extrémité (4), et qui, lors de l'introduction du tronçon extrême (8) dans le logement (7), vient en prise par derrière avec le décrochement (6) par sa face frontale (12) et s'encliquette ainsi dans le logement (7), caractérisé par le fait que le cliquet de verrouillage (10) consiste en un matériau flexible qui, lors de l'extraction de l'élément allongé du logement (7), se bombe, sous l'effet de la pression de refoulement exercée par le décrochement (6) sur le cliquet de verrouillage (10) par l'intermédiaire de la face frontale (12), jusqu'à ce que cette face frontale (12) du cliquet de verrouillage (10) se dégage du décrochement (6), en provoquant ainsi une libération de l'élément allongé.

2. Dispositif selon la revendication 1, caractérisé par le fait que le cliquet de verrouillage (10) et le tronçon extrême (8) de l'élément allongé (2) sont ménagés d'un seul tenant en un matériau doué de flexibilité élastique.

3. Dispositif selon la revendication 2, caractérisé par le fait que le décrochement (6) se trouve sur une pièce prisonnière (14) qui délimite le logement (7) et est destinée à être fixée avec faculté de remplacement.

4. Dispositif selon la revendication 1, caractérisé par le fait que le cliquet de verrouillage (10) est fixé, avec faculté de remplacement, à l'extrémité (4) de l'élément allongé (2).

5. Dispositif selon la revendication 1, caractérisé par le fait que le cliquet de verrouillage (10) est pourvu d'une saillie qui dépasse du logement (7), et au moyen de laquelle ce cliquet de verrouillage (10) peut être désencliqueté manuellement.

6. Dispositif selon la revendication 1, caractérisé par un évidement dirigé vers le cliquet de verrouillage (10), et dans lequel un outil peut être engagé pour désencliqueter ce cliquet de verrouillage (10).

0 085 929

FIG.1

FIG.2

FIG.3

1